# EUROPEAN PATENT APPLICATION

(11) **EP 4 340 105 A1**
(43) Date of publication of application: **20.03.2024**
(21) Application number: 23807849.7
(22) Date of filing: 15.05.2023
(51) Int. Cl.: H01M 50/204, H01M 50/289, H01M 10/613, H01M 10/6556, H01M 10/6568, H01M 50/264

(54) **BATTERY PACK**

(30) Priority: 16.05.2022 KR 20220059686; 21.10.2022 KR 20220136114
(71) Applicant: LG Energy Solution, Ltd., Seoul 07335 (KR)
(72) Inventor: SHIN, Ju Hwan, Daejeon 34122 (KR); JANG, Byung Do, Daejeon 34122 (KR); KIM, Ki Young, Daejeon 34122 (KR); LEE, Hyoung Suk, Daejeon 34122 (KR); YANG, Chang Hyeon, Daejeon 34122 (KR)
(74) Representative: Plasseraud IP
(86) International application number: PCT/KR2023/006524
(87) International publication number: WO 2023/224330

(57) **Abstract**

The disclosed technology relates to a battery pack. In an example, the battery pack includes: a pair of base plates, a center frame between the pair of base plates and connected to each of the base plates at both sides in a longitudinal direction, a pair of side frames each connected to an outer side surface of each of the base plates in the longitudinal direction, and a plurality of battery modules on the pair of base plates in a pack space between the center frame and the side frame, wherein each of the plurality of battery modules includes a pair of module frames and accommodates a plurality of battery cells, and wherein the plurality of battery modules are accommodated in the pack space such that the module frames are disposed in a direction crossing the center frame and the side frame.

## Description

### [Cross-Reference to Related Applications]

This application is a National Phase entry of International Application No. PCT/KR2023/006524, filed on May 15, 2023, and claims the benefit of and priority to Korean Patent Application No. 10-2022-0059686, filed on May 16, 2022, and Korean Patent Application No. 10-2022-0136114, filed on October 21, 2022, the disclosures of which are incorporated by reference in their entirety for all purposes as if fully set forth herein.

### [Technical Field]

The present disclosure relates to a battery pack in which a space utilization rate inside a pack may be improved and the structures of the module and pack may be simplified to reduce costs, and which may be easily changed or expanded according to various specifications.

### [Background]

Secondary batteries are rechargeable unlike primary batteries and are being researched and developed a lot due to their compact size and high capacity potential. The demand for secondary batteries as energy sources is increasing more rapidly due to technology development and an increase in demand for mobile devices and also due to electric vehicles and energy storage systems that are emerging in line with the needs of the times for environmental protection.

Secondary batteries are classified into coin type batteries, cylindrical type batteries, prismatic type batteries, and pouch type batteries according to the shape of a battery case. In such a secondary battery, an electrode assembly mounted in a battery case is a chargeable or dischargeable power generating device having a structure in which an electrode and a separator are stacked.

In secondary batteries, a plurality of battery cells may be grouped in the form of a battery pack. By increasing energy density, battery packs may be mounted in devices requiring high energy, such as electric vehicles. Battery packs output prescribed power by electrically connecting a plurality of battery cells and include various safety devices that cool the battery cells whose temperature rises during operation and respond to emergency situations such as ignition.

In battery packs, there is one significant challenge to increase the energy density per unit volume, which ultimately depends on how efficiently a space inside the battery pack can be utilized. That is, it is necessary to mount more battery cells in the same pack space, and making the structure of the battery pack as simple as possible is one solution.

In addition, it is advantageous to simplify the structure of a battery pack in terms of reducing the production cost of the battery pack, and furthermore, there is a need to design a structure that may be easily changed to battery packs of various sizes.

The background description provided herein is for the purpose of generally presenting context of the disclosure. Unless otherwise indicated herein, the materials described in this section are not prior art to the claims in this application and are not admitted to be prior art, or suggestions of the prior art, by inclusion in this section.

### [Summary]

### [Technical Problem]

An object of the present disclosure is to provide a battery pack in which a space utilization rate inside a pack may be improved and structures of a module and the pack may be simplified to reduce costs, and which may be easily changed or expanded according to various specifications.

However, the technical objects to be solved by the present disclosure are not limited to the above-described object, and other objects not described herein will be clearly understood by those skilled in the art from the following descriptions of the present disclosure.

### [Technical Solution]

According to the present disclosure, there is provided a battery pack, including a pair of base plates; a center frame between the pair of base plates and connected to each of the base plates at both sides in a longitudinal direction; a pair of side frames each connected to an outer side surface of each of the base plates in the longitudinal direction; and a plurality of battery modules on the pair of base plates in a pack space between the center frame and the side frame, wherein each of the plurality of battery modules includes a pair of module frames and accommodates a plurality of battery cells, and wherein the plurality of battery modules are accommodated in the pack space and the module frames are disposed in a direction crossing the center frame and the side frame.

The pair of module frames may be disposed at both ends of the plurality of battery cells arranged along in a thickness direction of the battery cells.

The module frame may be fixed to one of the side frames while accommodating the plurality of battery cells.

Two adjacent module frames between two adjacent battery modules among the plurality of battery modules may be fixed to each other in the longitudinal direction.

The module frames may be fixed to the base plate.

The module frames may support a load in the direction crossing the center frame and the side frame.

The plurality of battery modules may be accommodated in the pack space by utilizing a temporary battery module including a pair of temporary assembly plates coupled to an upper surface and a lower surface of the pair of module frames, respectively.

The center frame and the side frames may be connected to the pair of base plates through friction stir welding.

The battery pack may further include: a front frame and a rear frame coupled to the pair of side frames to surround a peripheral portion of the pack space, wherein the side frame, the front frame, and the rear frame have the same shape.

The base plate may include a plurality of cooling channels extending in the longitudinal direction therein.

The cooling channel may be integrally formed with the base plate.

One ends of the cooling channels in the longitudinal direction of the base plate may form inlet channels, and the other ends thereof in the longitudinal direction of the base plate may form outlet channels.

An inlet joint and an outlet joint may be coupled to the inlet channel and the outlet channel, respectively.

The inlet joint and the outlet joint respectively may have one coolant inlet and one coolant outlet to be connected to the inlet channels and the outlet channels in parallel.

The inlet joint and the outlet joint may be connected to the inlet channel and the outlet channel through quick connectors, respectively.

### [Advantageous Effects]

In a battery pack of the present disclosure having the configuration described above, a separate cross beam is not provided in a pack case, and a module frame constituting a battery module supports a load in a direction crossing a center frame and a side frame. Therefore, since a weld bead generated when a cross beam structure is coupled to a pack case disappears, it is possible to densely arrange more battery cells in the same pack space, thereby improving a space utilization rate inside a pack.

In addition, the structures of a battery module and a battery pack can be simplified to reduce costs, and as the structure becomes simpler, the battery pack can be easily changed or expanded according to various specifications.

However, the technical effects obtainable through the present disclosure are not limited to the above-described effects, and other effects not described herein will be clearly understood by those skilled in the art from the following descriptions of the present disclosure.

### [Brief Description of the Drawings]

The accompanying drawings illustrate exemplary embodiments of the present disclosure and, together with the detailed description of the present disclosure, serve to provide further understanding of the technical spirit of the present disclosure. However, the present disclosure is not to be construed as being limited to the drawings.
FIG. 1 is a view illustrating an overall structure of a battery pack according to the present disclosure.
FIG. 2 is a view illustrating a structure of a pack case.
FIG. 3 is a view illustrating a battery module.
FIGS. 4 and 5 are views illustrating a fixing structure between adjacent battery modules.
FIG. 6 is a view illustrating a fixing structure between a battery module and a side frame.
FIG. 7 is a view illustrating a fixing structure between a battery module and a base plate.
FIGS. 8 and 9 are views illustrating a cooling channel provided in a battery pack.

### [Detailed Description]

Since the present disclosure may be variously changed and have various embodiments, specific embodiments will be described in detail below.

However, it should be understood that there is no intention to limit the present disclosure to particular embodiments, and on the contrary, the present disclosure is to cover all modifications, equivalents, and alternatives falling within the spirit and scope of the present disclosure.

In this application, it should be understood that terms such as "include" and "have" are intended to indicate the presence of a feature, number, step, operation, component, part, or a combination thereof described in the specification, and they do not preclude the possibility of the presence or addition of one or more other features or numbers, steps, operations, components, parts or combinations thereof.

Also, when a first portion such as a layer, a film, an area, a plate, etc. is referred to as being "on" a second portion, this includes not only the case where the first portion is "directly on" the second portion, but also the case where a third portion is interposed therebetween. On the other hand, when a first portion such as a layer, a film, an area, a plate, etc. is referred to as being "under" a second portion, this includes not only the case where the first portion is "directly under" the second portion, but also the case where a third portion is interposed therebetween. In addition, to be disposed "on" in the present application may include the case of being disposed at the bottom as well as the top.

The present disclosure relates to a battery pack, and in an example, a pack case forming a pack space for accommodating a plurality of battery cells includes base plates, a center frame, and side frames.

A pair of base plates are provided, and the center frame is interposed between the pair of base plates and connected to each of the base plates at both sides in a longitudinal direction. A pair of side frames are each connected to an outer side surface of the base plate in the longitudinal direction.

A plurality of battery modules are seated on the base plates in a pack space between the center frame and the side frames. Each battery module includes a pair of module frames for accommodating the plurality of battery cells. Each battery module is accommodated in the pack space such that the module frames are disposed in a direction crossing the center frame and the side frame, that is, in a width direction.

In the battery pack of the present disclosure having the configuration described above, the module frame constituting the battery module supports a load in the direction crossing the center frame and the side frame. In other words, the module frame included in the battery module serves as a cross beam.

As described above, in the battery pack of the present disclosure, a separate cross beam is not provided in the pack case, and the module frame included in the battery module serves as the cross beam. Therefore, since a weld bead generated when a cross beam structure is coupled to a pack case disappears, it is possible to densely arrange more battery cells in the same pack space, thereby improving the space utilization rate inside a pack.

In addition, the structures of a module and a pack can be simplified to reduce costs, and as the structure becomes simpler, the battery pack can be easily changed or expanded according to various specifications.

### [Modes for Carrying Out the Invention]

Hereinafter, specific embodiments of the present disclosure will be described with reference to the accompanying drawings. For reference, front and rear directions or up, down, left, and right directions for designating relative positions used in the following description are intended to help the understanding of the present disclosure and are based on directions shown in the drawings unless otherwise specified.

### [First embodiment]

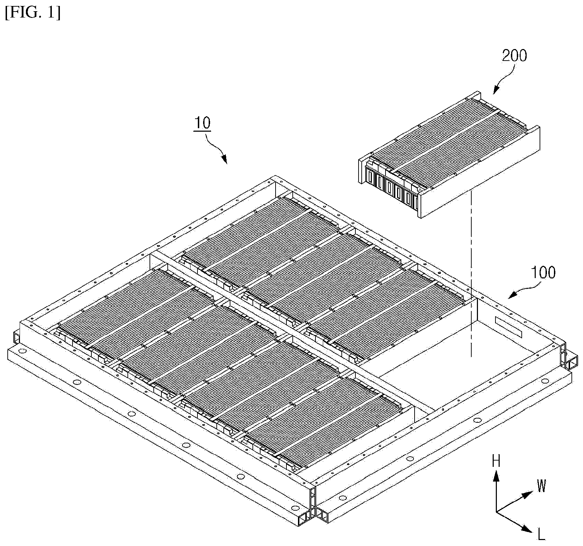

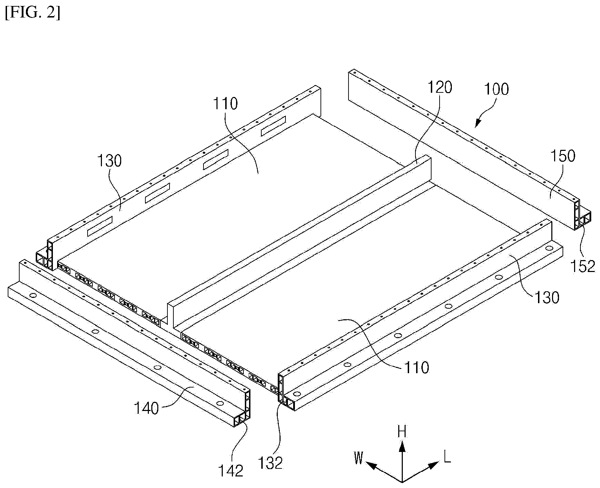

FIG. 1 is a view illustrating an overall structure of a battery pack 10 according to the present disclosure. FIG. 2 is a view illustrating a structure of a pack case 100.

The present disclosure relates to the battery pack 10, and the pack case 100 forming pack spaces for accommodating a plurality of battery cells 220 includes base plates 110, a center frame 120, and side frames 130.

A pair of base plates 110 are provided, and the center frame 120 is interposed between the pair of base plates 110 and connected to each of the base plates 110 at both sides in a longitudinal direction L. Each of a pair of side frames 130 is connected to an outer side surface of one of the base plates 110 in the longitudinal direction L.

Here, the pair of base plates 110 being provided means that the base plates 110 are coupled to both sides of the center frame 120. Each base plate 100 is formed by bonding several plates. In addition, the pair of base plates 110 being provided may does not mean that the base plates 110 at both sides are necessarily symmetrical based on the center frame 120.

The center frame 120 has an inverted T-shape to form a partition wall for the base plates 110 at both sides and form a coupling surface for each base plate 110. Referring to FIG. 1, a plurality of battery modules 200 are mounted in each of the pack spaces at both sides divided by the vertical partition wall of the center frame 120, and in the embodiment shown as an example in the drawing, four battery modules 200 are mounted in each of the pack spaces.

In the first embodiment of the present disclosure, the center frame 120 and the side frame 130 are connected or coupled to the pair of base plates 110 through friction stir welding. A weld bead is minimized by friction stir welding, and connection surfaces between the base plates 110, and the center frame 120 and the side frames 130 form flat surfaces. If necessary, the weld bead may be completely removed through a cutting process such as milling.

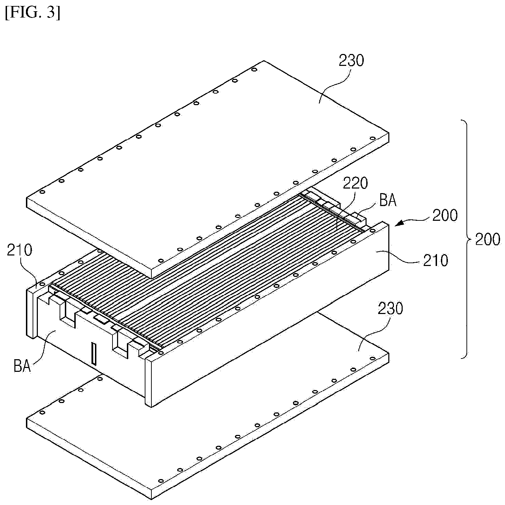

The plurality of battery modules 200 are provided and are seated on the base plate 110 along the pack space between the center frame 120 and the side frame 130. FIG. 3 is a view illustrating the battery module 200. As shown in the drawing, each battery module 200 includes a pair of module frames 210 for accommodating the plurality of battery cells 220.

The pair of module frames 210 are disposed at both ends of the plurality of battery cells 220 arranged in a line along a thickness direction of the battery cells 220 (that is, the longitudinal direction of the pack case). The module frame 210 is fixed to the side frame 130 of the pack case 100 while accommodating the plurality of battery cells 220, and each battery module 200 is accommodated in the pack space such that the module frames 210 are disposed in a direction crossing the center frame 120 and the side frame 130, that is, in a width direction W.

In the illustrated embodiment, busbar assemblies BA for electrical connection of the plurality of battery cells 220 are provided at both ends of the battery module 200 in the width direction. The busbar assemblies BA connect the plurality of battery cells 220 constituting the battery module 200 in series, parallel, or series-parallel. In addition, the plurality of battery modules 200 are electrically connected to each other through the busbar assemblies BA.

As shown in FIG. 1, the plurality of battery modules 200 mounted in the pack space are densely arranged without being spaced apart, and accordingly, the module frames 210 of adjacent battery modules 200 are in contact with each other. The module frame 210 has a form of being inserted between the center frame 120 and the side frame 130 in the width direction W. In other words, the module frame 210 forms a grid frame structure of the pack case 100 together with the center frame 120 and the side frame 130.

In the pack case 100 of the present disclosure, the center frame 120 and the side frame 130 support a load acting in the longitudinal direction L, and a separate support structure for a load in the width direction W is not provided. Instead, the module frame 210 constituting the battery module 200 supports a load in a direction crossing the center frame 120 and the side frame 130, that is, in the width direction W.

That is, in the battery pack 10 of the present disclosure, the pack case 100 itself does not include a frame structure supporting the load in the direction W, but the plurality of battery modules 200 are mounted in the pack space so that the module frames 210 complete a grid frame structure, thereby strengthening the rigidity of the battery pack 10 in both the longitudinal direction L and the width direction W.

In this way, in the battery pack 10 of the present disclosure, the pack case 100 does not include a separate cross beam, and the module frame 210 included in the battery module 200 serves as a cross beam. Therefore, weld beads generated when a cross beam structure is coupled to the pack case 100 may disappear, and as there is no dead space, which has not been used due to the weld beads, more battery cells 220 may be densely disposed in the same pack space, thereby improving the space utilization rate inside the pack.

In addition, the structures of a module and a pack are simplified as much as the need to provide a cross beam in the pack case 100 is eliminated, and the process and time for providing the cross beam are saved, thereby reducing the costs required for manufacturing the battery pack 10.

In the present disclosure, the basic size of the pack case 100 is determined by the pair of base plates 110 and the center frame 120. For example, only the width of the base plate 110 is changed while the specifications of the center frame 120 and the side frame 130 remain the same so that battery cells 220 having different widths may be mounted. Accordingly, the battery pack 10 of the present disclosure can be easily changed or expanded according to various specifications while the basic platform thereof is maintained.

Additionally, as in the embodiment of FIG. 2, a front frame 140 and a rear frame 150 may be coupled to a front side and a rear side of the pack case 100, respectively. The front frame 140 and the rear frame 150 serve to protect the battery module 200 disposed at a peripheral portion of the pack space and suppress the twisting of the pack case 100. The front frame 140 and the rear frame 150 also partially support the load in the width direction W, but the module frame 210 of the battery module 200 mainly serves as a cross beam of the pack case 100.

Referring to FIGS. 1 and 2, similar to the internal structure of the above-described center frame 120, grid-shaped ribs 132, 142, and 152 are formed inside the side frame 130, the front frame 140, and the rear frame 150, respectively, and the overall shape thereof is an L-shape. Accordingly, due to the ribs 132, 142, and 152 provided inside the frames 130, 140, and 150 and a L-shaped bent structure, the pack case 100 may have sufficient mechanical strength while being lightweight.

In addition, another feature is that, in the illustrated embodiment, all of the side frame 130, the front frame 140, and the rear frame 150 have the same shape. This is to ensure that each of the frames 130, 140, and 150 can be manufactured by producing a long frame base material through a continuous extrusion method and then cutting according to design dimensions. Accordingly, the manufacturing costs of the pack case 100 of the present disclosure can be reduced, and even when the size specification of the pack case 100 is changed, it is possible to flexibly respond to changes in size specifications with minimal cost.

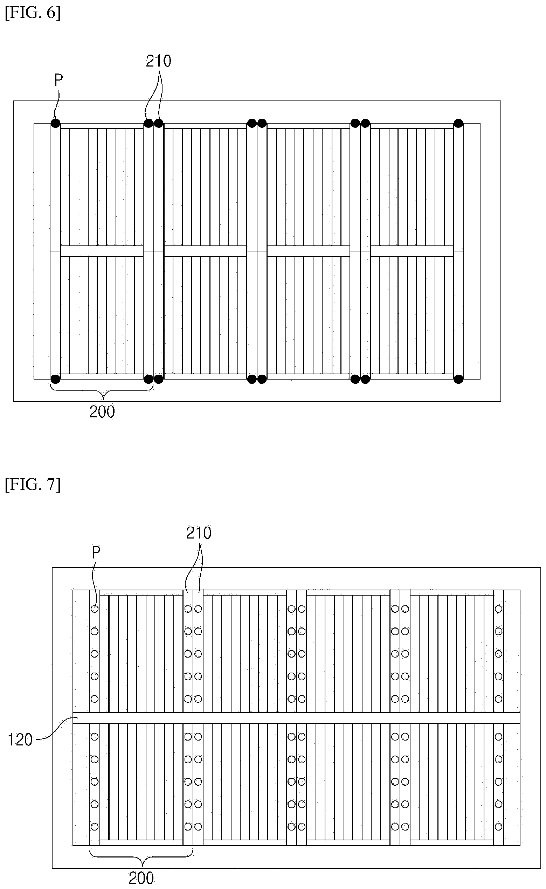

The battery module 200 is fixed to the pack case 100 by the module frame 210. As shown in FIG. 6, the module frame 210 is fixed to the side frame 130 of the pack case 100 while accommodating the plurality of battery cells 220 (indicated by a fixing point P). For example, the module frame 210 may be fixed to the side frame 130 through a bolting structure coupled to a facing surface of the module frame 210 through a side surface of the side frame 130.

Also, as well as fixing the module frame 210 to the side frame 130, the battery pack 10 of the present disclosure may further include an additional fixing structure for more firmly supporting the battery module 200. For reference, additional fixing structures to be described below may be combined in various ways.

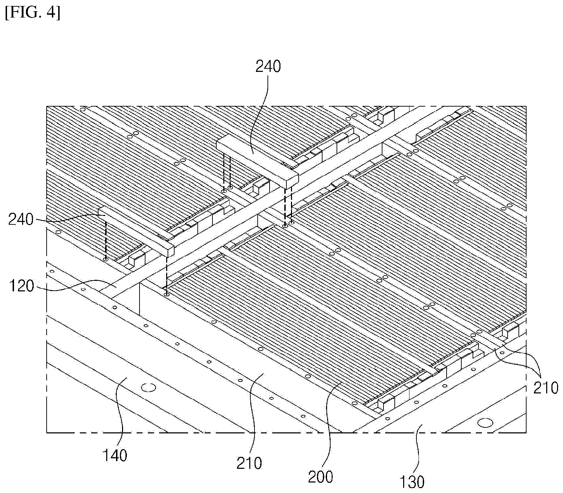

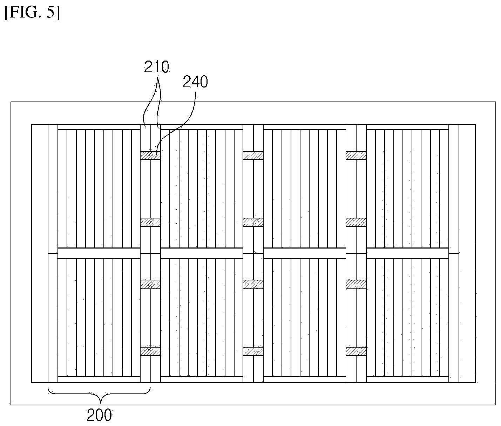

FIGS. 4 and 5 are views illustrating a fixing structure between adjacent battery modules 200. FIG. 4 illustrates a case in which the battery modules 200 in which the pack spaces are divided with the center frame 120 interposed therebetween are fixed to each other using a fixing plate 240. FIG. 5 illustrates a case in which adjacent battery modules 200 of which the module frames 210 are in contact with each other in one pack space are fixed to each other using a fixing plate 240.

That is, adjacent battery modules 200 in the width direction W or the longitudinal direction L may be fixed to each other by connecting the module frames 210 to each other, and since the plurality of battery modules 200 are connected as one module, the fixing of the battery module 200 becomes more robust. In addition, since the module frames 210 of the battery modules 200 in contact with each other are bound together, the rigidity of the pack case 100 in the width direction W is also strengthened.

Furthermore, the module frame 210 may also be fixed to the base plate 110. In FIG. 7, a structure in which a bottom surface of the module frame 210 is fixed to the base plate 110 is indicated by a fixing point P, and the fixing of the module frame 210 to the base plate 110 also improves a coupling force between the battery module 200 and the pack case 100. For reference, FIG. 7 illustrates a bottom surface of the pack case 100 from which the base plate 110 is omitted. It should be noted that the fixing point P indicates only a fastening point and does not limit a fastening structure itself.

Meanwhile, in the battery module 200, the plurality of battery cells 220 are accommodated between the module frames 210. A separate fastening structure is not provided between the module frame 210 and the battery cell 220, and thus the structure of the battery module 200 is very simplified. When the battery module 200 is installed in the pack case 100, the plurality of battery cells 220 are inserted between the module frames 210 and fixed with double-sided tape or the like, but the battery cells 220 are not completely fixed before being mounted in the pack case 100.

To this end, as shown in FIG. 3, as a temporary structure of the transportable battery module 200 before assembly in the pack space, a pair of temporary assembly plates 230 are respectively coupled to upper and lower surfaces of the pair of module frames 210 to form a temporary battery module 200'. The plurality of battery cells 220 can be stably transported for assembly of the battery pack 10 in a state of being surrounded by the module frames 210 and the temporary assembly plates 230. For example, it may be convenient to handle the plurality of battery cells 220 in the form of the temporary battery module 200' during long-distance transportation. However, the temporary battery module 200' is the battery module 200 in a temporarily assembled state for convenience of handling, and the temporary assembly plate 230 is not necessarily used.

### [Second embodiment]

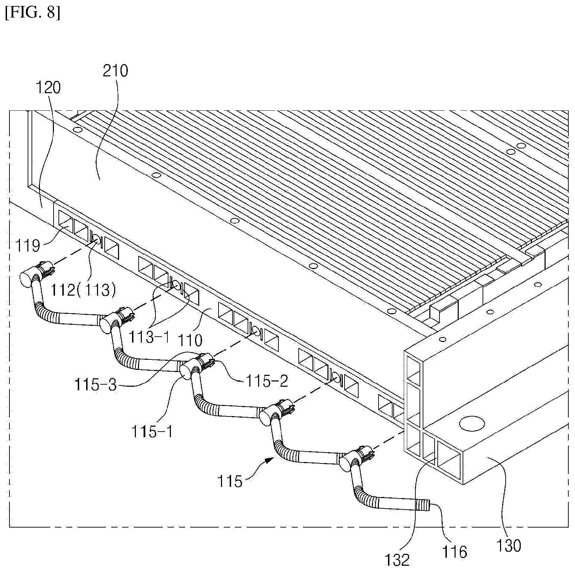

FIGS. 8 to 9 are views of a second embodiment of the present disclosure. Referring to the accompanying drawings, in the second embodiment of the present disclosure, a base plate 110 includes a plurality of cooling channels 112 extending in a longitudinal direction L therein.

Since frame parts such as the base plate 110, a center frame 120, and a side frame 130 may be designed to have a uniform cross section, the battery pack 10 of the present disclosure may be manufactured through extrusion molding. Therefore, the base plate 110 may be manufactured by extruding a material such as an aluminum alloy, and in such an extrusion molding process, the cooling channel 112 may be integrally formed with the base plate 110.

Since the plurality of cooling channels 112 are integrally provided inside the base plate 110, the structure of the battery pack 10 is simplified as much as the need to install a separate cooling pad is eliminated, and it is helpful in reducing a weight and costs.

In one embodiment shown in FIG. 8, the cooling channels 112 integrally formed in the base plate 110 are shown, and a hollow portion 119 is formed next to the cooling channel 112. The hollow portion 119 serves to reduce the weight of the base plate 110, and at the same time, serves as a path for dissipating heat accumulated in the base plate 110. That is, heat inside the base plate 110 may be discharged through the space of the hollow portion 119 to lower the temperature of the base plate 110, and as the temperature of the base plate 110 is lowered, heat generated from the battery module 200 can be smoothly absorbed.

One end of the cooling channel 112 in a longitudinal direction L of the base plate 110 may form an inlet channel 113, and the other end thereof in the longitudinal direction L may form an outlet channel 114. That is, the cooling channel 112 may form a straight flow path, and in particular, when the base plate 110 is formed through extrusion molding, the cooling channel 112 may form a straight flow path.

A cooling medium, for example, a coolant, flows into the inlet channel 113, absorbs heat, and then flows out through the outlet channel 114. An inlet joint 115 and an outlet joint 117 may be respectively coupled to the inlet channel 113 and the outlet channel 114 to supply and discharge a coolant.

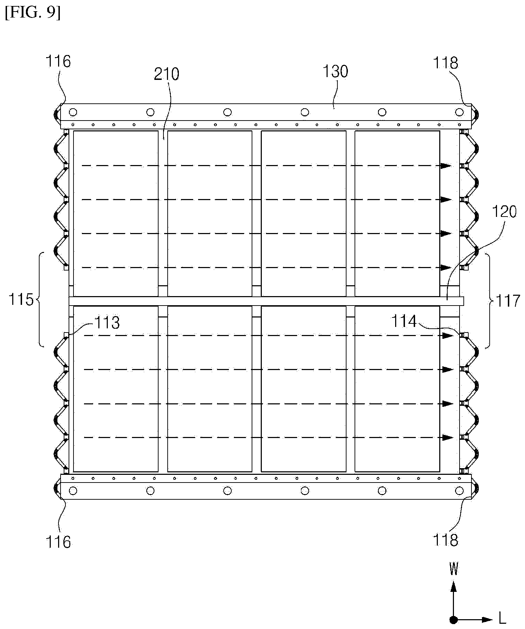

FIG. 8 shows an enlarged view of the inlet joint 115. In one example, the inlet joint 115 may have a structure in which a plurality of corrugated pipes are serially connected to each other to communicate with each other through a coupler 115-1. The coupler 115-1 of the inlet joint 115 may have a structure in which coupling is achieved just by inserting a quick coupler, that is, the coupler 115-1, into the inlet channel 113 without using any tools. For example, as shown in FIG. 8, the inlet joint 115 may include a quick coupler in which coupling is completed just by inserting a hook 115-2, which is a wedge-shaped coupling portion provided in the coupler 115-1, into grooves formed at left and right sides of the Inlet channel 113. A leading end of the coupler 115-1 inserted into the inlet channel 113 may have a shape corresponding to a cross section of the inlet channel 113, and a sealing member such as an O-ring 115-3 provided at the leading end of the coupler 115-1 may seal the inlet channel 113 so that the leakage of a coolant can be prevented. Here, as shown in FIG. 9, it is obvious that the outlet joint 117 may also have the same configuration as the inlet joint 115.

In the illustrated second embodiment, the inlet joint 115 and the outlet joint 117 respectively have one coolant inlet 116 and one coolant outlet 118 and are connected to a plurality of inlet channels 113 and a plurality of outlet channels 114 in parallel. That is, a coolant which flows into one coolant inlet 116 sequentially flows into the plurality of inlet channels 113 starting from the inlet channel 113 close to the coolant inlet 116. Similarly, coolants flowing out through the plurality of outlet channels 114 merge into one flow and are discharged through one coolant outlet 118.

According to such an embodiment, it is easy to form a coolant circuit for the plurality of battery packs 10 as much as the number of coolant inlets and outlets 116 and 118 is minimized.

The inlet joint 115 and the outlet joint 117 connected to the plurality of inlet channels 113 and the plurality of outlet channels 114 in parallel may include corrugated pipes between the inlet joints 115 and between the outlet joints 117. The inlet and outlet joints 115 and 117, which include corrugated pipes to have flexibility, facilitate the operation of connecting to the plurality of inlet channels 113 and the plurality of outlet channels 114 and also absorb vibrations caused by the flow of a coolant or external vibrations transmitted from the battery pack, thereby preventing an accident in which the coupling of the inlet and outlet joints 115 and 117 is loosened.

The present disclosure has been described above in more detail through the drawings and embodiments. However, the configurations described in the drawings or the embodiments in the specification are merely embodiments of the present disclosure and do not represent all the technical ideas of the present disclosure. Thus, it is to be understood that there may be various equivalents and variations that can replace them at the time of filing the present application.

**[Description of reference numerals]**

| | | | |
|---|---|---|---|
| 10: | battery pack | 100: | pack case |
| 110: | base plate | 112: | cooling channel |
| 113: | inlet channel | 114: | outlet channel |
| 115: | inlet joint | 115-1: | coupler |
| 115-2: | hook | 115-3: | O-ring |
| 116: | coolant inlet | 117: | outlet joint |
| 118: | coolant outlet | 120: | center frame |
| 130: | side frame | 140: | front frame |
| 150: | rear frame | 132, 142, 152: | rib |
| 200: | battery module | 210: | module frame |
| 220: | battery cell | 230: | temporary assembly plate |
| 240: | fixing plate | BA: | busbar assembly |
| P: | fixing point | | |

## Claims

1. A battery pack, comprising:
a pair of base plates;
a center frame between the pair of base plates and connected to each of the base plates at both sides in a longitudinal direction;
a pair of side frames each connected to an outer side surface of each of the base plates in the longitudinal direction; and
a plurality of battery modules on the pair of base plates in a pack space between the center frame and the side frame,
wherein each of the plurality of battery modules includes a pair of module frames and accommodates a plurality of battery cells, and
wherein the plurality of battery modules are accommodated in the pack space and the module frames are disposed in a direction crossing the center frame and the side frame.

2. The battery pack of claim 1, wherein the pair of module frames are disposed at both ends of the plurality of battery cells arranged along a thickness direction of the battery cells.

3. The battery pack of claim 2, wherein the module frame is fixed to one of the side frames while accommodating the plurality of battery cells.

4. The battery pack of claim 3, wherein two adjacent module frames between two adjacent battery modules among the plurality of battery modules are fixed to each other in the longitudinal direction.

5. The battery pack of claim 4, wherein the module frames are fixed to the base plate.

6. The battery pack of claim 1, wherein the module frames support a load in the direction crossing the center frame and the side frame.

7. The battery pack of claim 1, wherein the plurality of battery modules are accommodated in the pack space by utilizing a temporary battery module including a pair of temporary assembly plates coupled to an upper surface and a lower surface of the pair of module frames, respectively.

8. The battery pack of claim 1, wherein the center frame and the side frames are connected to the pair of base plates through friction stir welding.

9. The battery pack of claim 1, further comprising:
a front frame and a rear frame coupled to the pair of side frames to surround a peripheral portion of the pack space,
wherein the side frame, the front frame, and the rear frame have the same shape.

10. The battery pack of claim 1, wherein the base plate includes a plurality of cooling channels extending in the longitudinal direction therein.

11. The battery pack of claim 10, wherein the cooling channel is integrally formed with the base plate.

12. The battery pack of claim 10, wherein one ends of the cooling channels in the longitudinal direction of the base plate form inlet channels, and the other ends thereof in the longitudinal direction of the base plate form outlet channels.

13. The battery pack of claim 12, wherein an inlet joint and an outlet joint are coupled to the inlet channel and the outlet channel, respectively.

14. The battery pack of claim 13, wherein the inlet joint and the outlet joint respectively have one coolant inlet and one coolant outlet to be connected to the inlet channels and the outlet channels in parallel.

15. The battery pack of claim 13, wherein the inlet joint and the outlet joint are connected to the inlet channel and the outlet channel through quick connectors, respectively.
